# EUROPEAN PATENT APPLICATION

(11) **EP 2 226 756 A1**
(43) Date of publication of application: **08.09.2010**
(21) Application number: 09153962.7
(22) Date of filing: 27.02.2009
(51) Int. Cl.: G06Q 30/00

(54) **Communications system providing mobile wireless communications device predicted search query terms based upon groups of related advertising terms**

(71) Applicant: RESEARCH IN MOTION LIMITED, Waterloo, Ontario N2L 3W8 (CA)
(72) Inventor: Scott, Sherryl Lorraine Lee, Waterloo, ON N2L 3L3 (CA); Griffin, Jason T., Waterloo, ON N2L 3W8 (CA); Reeve, Scott, Waterloo, ON N2L 3W8 (CA); Klassen, Gerhard Dietrich, Waterloo, ON N2L 3W8 (CA)
(74) Representative: Phillips, Emily Elizabeth

(57) **Abstract**

A communications system may include an advertising server for providing at least one group of related advertising terms, and a mobile wireless communications device comprising a display, a user input device, and a processor coupled to the display and the user input device. The processor may be configured to display a user search interface on the display, receive entry of search query characters, and match the entered search query characters to identify at least one predicted search query term. Moreover, if the at least one predicted search query term is among the at least one group of related advertising terms, then the processor may cause the display to display at least one other of the group that would otherwise not match the entered search query character data.

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls Most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail messages and access the Internet via a cellular network and/or a wireless local area network (WLAN), for example,

As a result, users continue to spend more time using their mobile devices during the course of a day performing information searches, reading emails, etc., as opposed to early cellular phones that were used only for phones calls. This has resulted in a significant interest from the advertising community in targeting advertisements to mobile devices.

One exemplary system disclosed in U.S. Patent publication No. 2007/0192318 is for creating a mobile search suggestion dictionary, A list of expected search queries associated with a search vertical is created, and the list is ordered based on at least one factor. The ordered list of search queries is presented to a mobile communication facility for user selection. The ordering may be based on search query popularity or information relating to a mobile communication facility.

Despite the potential advantages of such approaches, further functionality may be desirable for providing search and advertising functionality in Mobile wireless device applications.

### Brief Description of the Drawings

FIG. 1 is a schematic block diagram of a communications system in accordance with one exemplary embodiment providing search query term prediction based upon advertising term groups.

FIG. 2 is a front view of an exemplary embodiment of the mobile wireless communications device of the system of FIG. 1.

FIG. 3 and FIGS. 4A-4B are flow diagrams illustrating method aspects in accordance with exemplary embodiments.

FIG. 5 is a schematic block diagram illustrating exemplary components of a mobile wireless communications device that may be used in accordance with the system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications system is disclosed herein which may include an advertising server for providing at least one group of related advertising terms, and a mobile wireless communications device comprising a display, a user input device, and a processor coupled to the display and the user input device. More particularly, the processor may be for displaying a user search interface on the display and for permitting entering of search query characters, and matching the entered search query characters to identify at least one predicted search query term. Moreover, if the at least one predicted search query term is among the at least one group of related advertising terms, then the processor may cause the display to display at least one other of the group that would otherwise not match the entered search query characters.

The user input device may include a key pad having a plurality of shared keys each corresponding to a plurality of different search query characters. In addition, the at least one predicted search query term may be a plurality thereof, and the processor may further preferentially rank advertising terms among the plurality of predicted search query terms. In accordance with one exemplary embodiment, the processor may visually highlight the predicted search query terms from the group of related advertising terms on the display.

Furthermore, the group of related advertising terms may have an expiration date associated therewith. As such, the processor may advantageously cease matching predicted search query terms from the group of related advertising terms after the expiration date. Further, the processor may cooperate with the display and user input device to display a plurality of search results based upon a selected one of the predicted search queries. Moreover, the advertising server may provide the at least one group of related advertising terms based upon selected search results.

The processor may further permit user designation of predicted search query terms as advertising terms. Additionally, the advertising server may also be for providing at least one advertising logo image, and the processor may also display the at least one advertising logo image if the at least one predicted search query term is among the at least one group of related advertising terms. By way of example, the mobile wireless communications device may be a cellular communications device.

A related mobile wireless communications device is also provided, such as the one described briefly above. In addition, a related communications method for a mobile wireless communications device including a display and a user input device is also provided. The method may include providing at least one group of related advertising terms, displaying a user search interface on the display of the mobile wireless communications device for permitting entering of search query characters using the user input device, and matching the entered search query characters to identify least one predicted search query term. Moreover, if the at least one predicted search query term is among the at least one group of related advertising terms, then the method may further include displaying at least one other of the group that would otherwise not match the entered search query characters on the display.

A related computer-readable medium may have computer-executable instructions for causing a mobile wireless communications device including a display and a user input device to perform steps including displaying a user search interface on the display for permitting entering of search query characters using the user input device, and matching the entered search query characters to identify at least one predicted search query term. Moreover, if the at least one predicted search query term is among at least one group of related advertising terms, then a further step of displaying at least one other of the group that would otherwise not match the entered search query characters on the display may be performed,

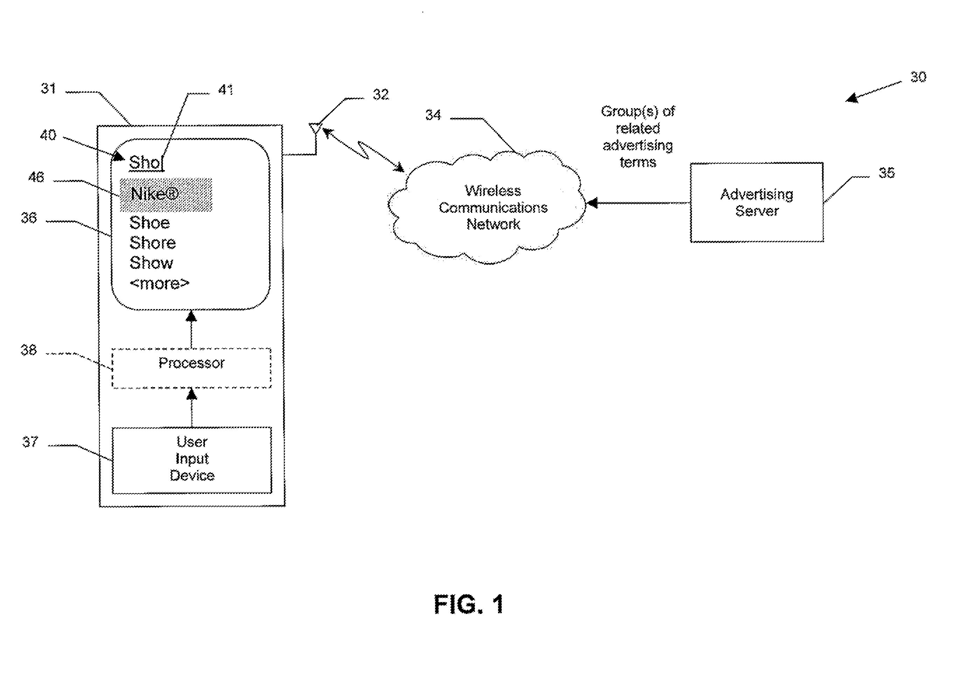

Turning now to FIGS. 1-3, a communications system **30** and associated communications method aspects are first described. The system **30** illustratively includes one or more mobile wireless communications devices **31** (NWCDs), or mobile devices for short, and associated antenna(s) **32,** which may include internal antennas, external antennas, or both. Moreover, the system **30** further illustratively includes a wireless communications network **34,** and an advertising server **35** that communicates with the mobile device **31** via the wireless communications network. In some embodiments, the advertising server **35** may communicate with the wireless communications network **34** via a wide area network, such as the Internet, for example (not shown).

By way of example, the mobile device **31** and wireless communications network **34** may operate in accordance with a cellular, wireless LAN (e.g., 802.11x, Bluetooth, etc.), WiMAX, satellite, etc., communications format, as will be appreciated by those skilled in the art, In some embodiments, more than one such wireless communications format may be used in the same device (e.g., cellular, wireless LAN, and Bluetooth). Various types of mobile wireless communications devices **31** may be used, such as mobile phones, PDAs, laptop computers, wireless-enabled cameras, wireless-enabled media players, etc., for example.

Beginning at Block **50,** the advertising server **35** advantageously provides one or more groups of related advertising terms to the mobile wireless communications device (s) **31,** at Block **51.** More particularly, the group of related advertising terms may be part of an advertising term campaign sponsored by an advertiser seeking to drive search result traffic, such as Internet search traffic, to a particular Website, for example. In the example illustrated in FIG. 1, the group of advertising terms includes "shoe" and "Nike^{®}", although any number of related advertising terms could be included within the group.

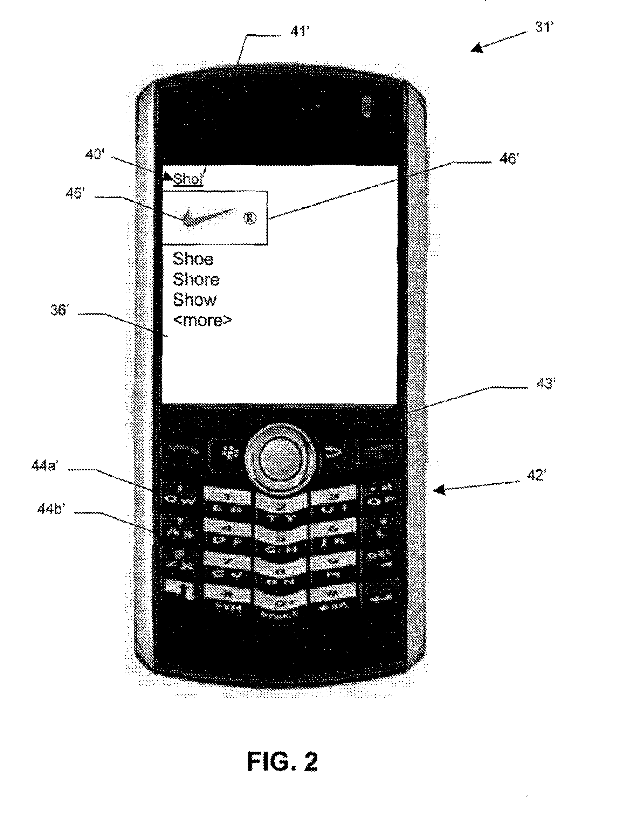

The mobile device **31** illustratively includes a display **36,** a user input device **37,** and a processor **38** coupled to the display and the user input device. By way of example, the display **36** may be a liquid crystal display (LCD) or other suitable display, as will be appreciated by those skilled in the art. As seen in the exemplary mobile device **31'** shown in FIG. 2, the user input device may take the form of a key pad **42',** a track ball **43',** etc. Also by way of example, the processor **38** may be implemented using a combination of hardware (e.g., microprocessor, memory, etc.) and software components, as will be appreciated by those skilled in the art.

The processor **38** causes a user search interface **40** to be displayed on the display **36** for permitting entering of search query characters, at Block **52**. As seen in the example of FIG. 1, the user search interface **40** is in the upper left hand corner of the display **36** and it shows a character string input by the user. For example, in the embodiment of FIG. 2 as the user types in successive characters using the key pad **42',** these characters are successively displayed from left to right in the user search interface **40'** on the display **36',** although other user search interface arrangements may also be used. A cursor **41'** is displayed at the end of the entered character string to indicate to the user where a next character will be displayed when input, as will be appreciated by those skilled in the art.

The processor **38** matches the entered search, query characters to identify one or more predicted search query terms, at Block **53.** More particularly, a dictionary or similar list of available words or terms may be stored on the mobile device **31,** or on the advertising server **35** (or other remotely located server) in some embodiments. In the example illustrated in FIG. 2, the key pad **42**' illustratively includes a plurality of shared keys **44'** each corresponding to a plurality of different search query characters. By way of example, in the illustrated embodiment a first shared key **44a'** has the letters "Q" and "W" and the exclamation point character ("1") thereon, and a key **44b'** has the letter "A" and "8" and the question mark character ("?") thereon.

Such a shared character key arrangement is particularly advantageous for reducing the space required for the key pad **42',** and may therefore advantageously allow smaller device sizes. However, it is often desirable to provide text disambiguation functionally with such an arrangement to assist users in typing desired terms, since typing can be somewhat more cumbersome if there is not an individual key for each character, as would be the case with a "full" key pad, e.g., a key pad, as will be appreciated by those skilled in the art. In such an embodiment, the dictionary or list of terms used to predict such search query terms may be a predictive text dictionary. With each new key stroke, the processor **38** eliminates as possibilities those terms from the dictionary that would not match any possible combination of the key strokes, and would typically display only predicted search query terms that do match the key stroke sequence. It should be noted that a shared key pad arrangement need not be used in all embodiments, as full key pads may also be used, or some combination of a shared and full key pad, as will be appreciated by those skilled in the art.

In embodiments with predictive text entry, the group of related advertising terms may be added to an exiting dictionary of terms, or it may be stored in a separate dictionary of advertising terms, for example. The predicted search query terms may be ranked based upon various criteria, including frequency of use (in general, by the user, or both), etc. Moreover, over time the processor **38** may track terms that are used more frequently and rank these terms higher in predicted search query term results. The dictionary (or dictionaries) of predicted search query terms may build with usage over time, that is, as users enter and select new terms not already in the dictionary then these terms may be added thereto by the processor **38.**

In addition, such a dictionary of advertising terms may collect or include brands, product names, or other terms that are designated as relevant by the user, When these terms are added to the dictionary, there may be a that lets the advertising server **35** know of the existence of the new term so that appropriate advertising term groups may be provided accordingly. Moreover, the terms in the dictionary may be filtered according to a relative value, i.e., the advertising server **35** may advantageously rank different terms with different values, for example, based upon a frequency of usage, etc. Also, advertisers may advantageously be allowed to pay additional fees to move their respective advertising terms up in rank order, as will be appreciated by those skilled in the art.

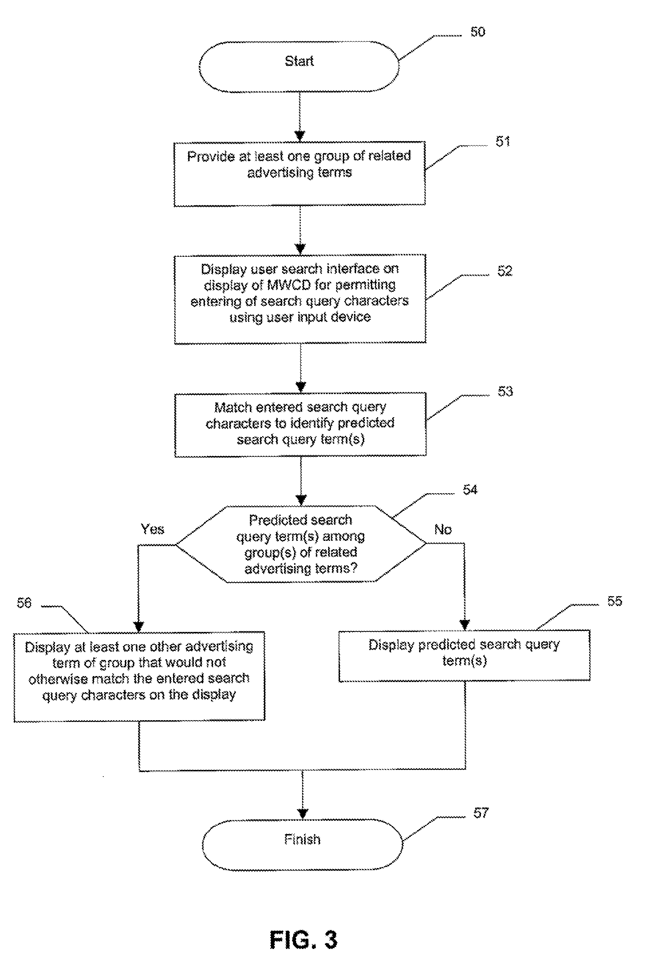

When a user enters a string or search query characters and one or more of the predicted search query terms is among the group of related advertising terms, then the processor **38** advantageously causes the display **36** to display at least one other term from the group that would otherwise not match the entered search query characters, at Blocks **54, 56,** along with other matching predicted search query terms not in the group (if applicable). If none of the predicted search query terms is from the group of related advertising terms, then the processor **38** may display those terms that do match the search query character string, at Block **55,** thus concluding the method illustrated in FIG. 3 (Block **57**).

In the present example, the user has entered or spoken (in the case where the user input device **37** is a microphone, for example) the characters "s", "h", and "o", which matches the returned search query terms "shoe", shore", and "show". As noted above, "shoe" is in the designated group of advertising terms that also include "Nike^{®}", which does not match the entered character string and would not have otherwise been presented to the user on the display **36,** but is presented on the display because it is in the related advertising term group. Accordingly, an advertiser may advantageously use common terms relating to its products or services to create an association to terms or slogans particularly associated with the goods or services, such as a corporate name, product/service name, etc. It should be noted that not all non-matching terms in a group of advertising terms need be displayed on the display **36** (i.e., it could be one or more). A "show all" option may be provided on the display **36** to permit the user to view all of the related terms within a given group thereof (or the full dictionary of advertising terms) in some embodiments, if desired.

In some embodiments, the advertising server **35** may also provide one or more advertising logo images to the device **31** as part of, or in association with, the group of related advertising terms. Thus, for example, the processor **38** may advantageously also display the advertising logo(s) along with (or in place of) an advertising term from among the group thereof. In the example illustrated in FIG. 2, the Nike^{®} "swoosh" symbol **45** is displayed among the list of predicted search query terms in place of the term "Nike^{®}" itself, which is displayed in the example of FIG. 1. The logo images may be in the form of bitmap, Joint Photographic Experts Group (JPEG), Graphics Interchange Format (GIF), or other suitable image/graphic files, as will be appreciated by those skilled in the art. Logo images may also bye prioritized over plain advertising terms in some embodiments, if desired. Another option is that advertising terms could turn into associated logo images as a cursor is moved over them (with or without user selection), for example.

The processor **38** may also preferentially rank advertising terms among the plurality of predicted search query terms displayed on the display **36**. In the examples of PIGS. 1 and 2, the term "Nike^{®}" is placed at the top of the list of predicted search query terms. The advertiser may provide compensation to a provider of the wireless communications network **34,** user, etc., for the ability to not only display the advertising terms but also to rank them ahead of other terms, as will be appreciated by those skilled in the art.

Similarly, the processor **38** may also advantageously visually highlight the predicted search query terms from the group of related advertising terms on the display. As seen in FIG. 1, for example, the term "Nike^{®}" is within a shaded box or area, and in the example of FIG. 2 the "swoosh" symbol is highlighted within an outlined (and unshaded) box. Various visual highlighting techniques may be used, such as underlining, bold text, colored text, flashing text, enlarged text, pop-up indicators, etc., as will be appreciated by those skilled in the art. It should be noted that various combinations of ranking and highlighting including one, both, or neither, may be used in different embodiments. Moreover, forms of highlighting other than or in addition to visual highlighting may also be used, such as audio indictors, tactile indicators (e.g., a vibration), etc., as will also be appreciated by those skilled in the art.

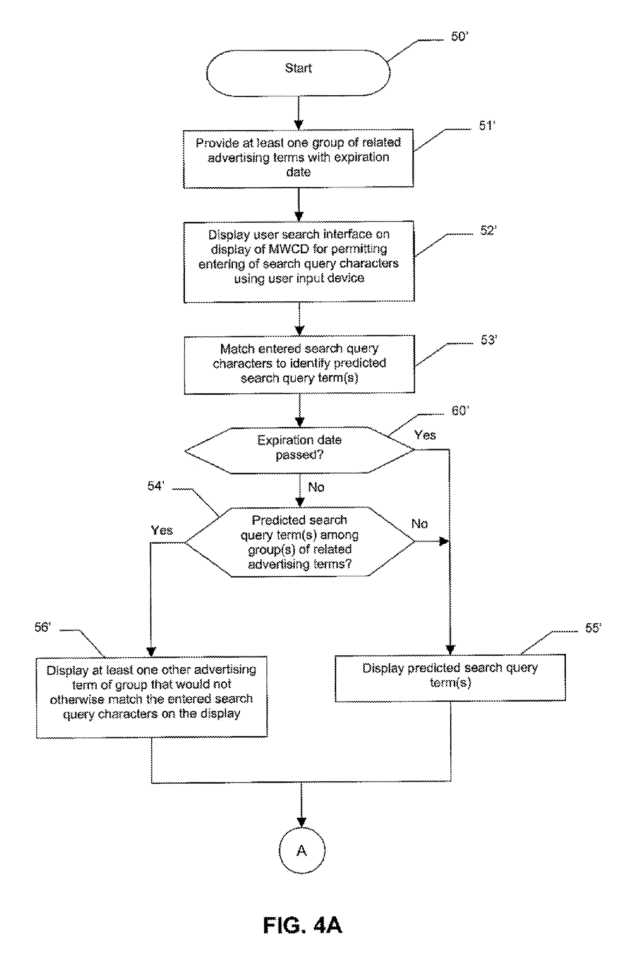

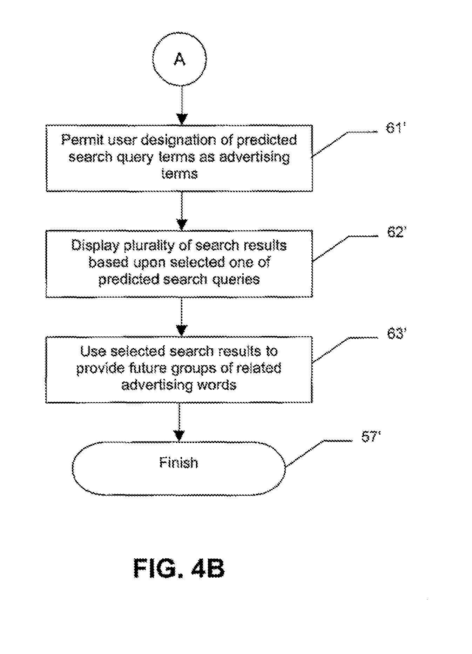

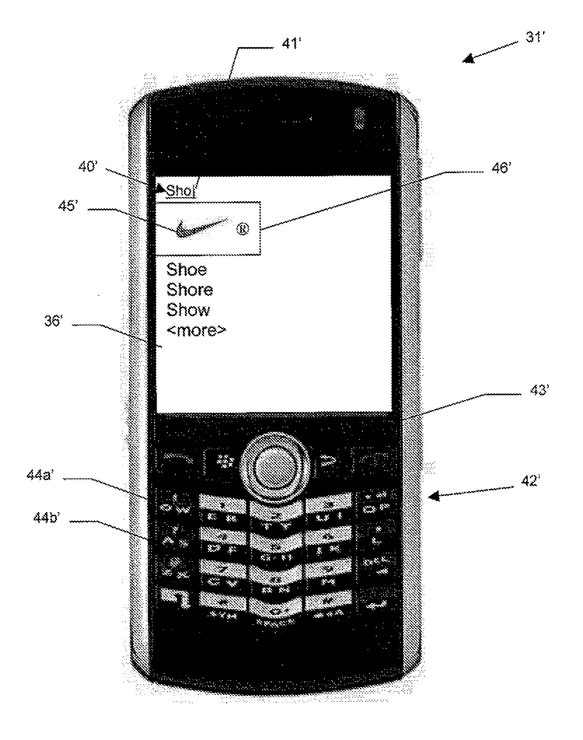

Referring additionally to FIGS. 4A-4B, the group of related advertising terms may have an expiration date associated therewith (Block **51**'). For example, the expiration date may correspond to a length of time that an advertiser has paid to run a particular advertising program, and this may be communicated from the advertising server **35** to the device **31** along with the group of related advertising terms. Accordingly, the processor **38** may further determine if the expiration date for the group of related advertising terms has expired or passed and, if so, cease matching predicted search query terms from the group of related advertising terms and thereby avoid including seme or all of the advertising terms in the predicted search query terms output on the display **36,** at Block **60**'. For example, since the term "shoe" may be used in a non-advertisement context, the processor **38** may continue to display this term in response to the "s", "h", and "o" character string, but cease providing the "Nike^{®}" term or the "swoosh" logo image after the expiration date. In some embodiments, upon expiration of a group of related advertising terms the user may be provided with an option to continue the use of the current terms, obtain related groups of terms (e.g., associated with new advertising campaigns), or optionally to allow the term usage to lapse. It should be noted that expiration may be relative (e.g., expire after a predetermined time period, such as 1 month, etc.) or absolute (e.g., expire on 12-31-09).

Furthermore, in some embodiments the processor **38** may advantageously allow the user to designate a predicted search query term (or terms) as an advertising term, at Block **61**', which allows it to be ranked above other terms, visually highlighted, etc. For example, the term "blackberry" may be provided as a predicted search query term responsive to the user's entered search query character string. If the user is looking for information on BlackBerry^{®} mobile communications devices rather than the blackberry fruit, the user may be given the option to designate "BlackBerry^{®}", as the particular term of interest (i.e., as an advertising term). The advertising server **35** may accordingly select groups of advertising terms that relate to (and potentially include) such designated search query terms since they are of interest to the user. An option may also be provided to remove a term from the designate advertising term list as well, so if the user looses interest in the particular item/subject the term (and potentially other related advertising terms) will not be preferentially ranked, visually highlighted, etc. Here again, a "show all" option may be provided so that the user is shown all of the terms in a group thereof (or all of the advertising terms) and may selectively remove the advertising terms (or groups thereof) that are not of interest.

Further, the processor **38** may cooperate with the display **36** and user input device(s) **37** to display a plurality of search results based upon a selected one of the predicted search queries, art Block **62**'. Again referring to the example of an Internet search browser, upon selection of a predicted search query term (or series of terms), the browser application being run by the processor **38** initiates a search request to an Internet server (which may be the advertising server in some embodiments, but need not be in all embodiments) which returns one or more relevant search results. The browser application then causes these results to be displayed on the display **36,** as will be appreciated by those skilled in the art. Moreover, the advertising server **35** may provide or select the group(s) of related advertising terms for the given device **31** based upon selected search results, at Block **63**'. That is, the advertising server **35** may select groups of advertising terms that correspond to areas that are typically searched (e.g., shoes, apparel, etc.). Such search history information may be stored at the mobile device **31** or advertising server **35,** for example.

It should be noted that the above-described advertising term search features may be used in other applications beside Internet searching or web searching. Generally speaking, the above-described approach may be used with numerous applications having a text input mode. For example, this approach may be used with other applications such as email, notes, to-do lists, calendar, contacts/address book, mapping applications, media players, games, shopping applications, document processing, chat or instant messenger programs, social networking applications, etc., as will be appreciated by those skilled in the art. Moreover, it may also be used generally in applications in which predictive text entry is utilized, as will also be appreciated by the skilled artisan.

Another advantageous feature of the above-described approach is that advertising terms may be selected, ranked, highlighted, or any combination thereof, based upon a given time of day or location of the mobile device **31**. For example, certain advertising terms may be more appropriate to display at particular times of day (e.g., coffee-related terms in the morning), or when the user is art a particular location (e.g., shoe-related terms may be more appropriate when the user is in a mall).

The forgoing operations may also be embodied in a computer-readable medium having computer-executable instructions for causing a mobile wireless communications device **31** including a display **36** and a user input device 37 to perform steps including displaying a user search interface **40** on the display for permitting entering of search query characters using the user input device, and matching the entered search query characters to identify at least one predicted search query term. Moreover, if the ant least one predicted search query term is among at least one group of related advertising terms, then a step of displaying at least one other term of the group or related advertising terms that would otherwise not match the entered search query characters on the display is performed.

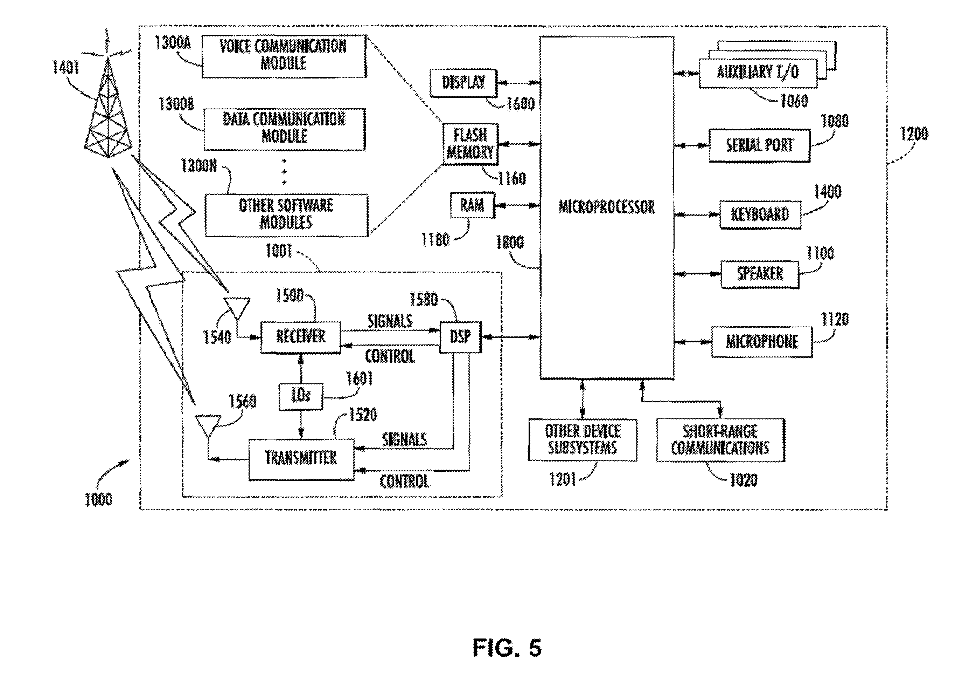

Exemplary components of a mobile wireless communications device **1000** that may be used in accordance with the system **30** are further described in the example below with reference to FIG. 5. The device **1000** illustratively includes a housing **1200**, a key pad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the key pad **1400** and the display **1600**. The processing device **1800** controls the operation of the display **1600**, as well as the overall operation of the mobile device **1000,** in response to actuation of keys on the key pad **1400** by the user. In some embodiments, key pad **1400** may comprise a physical key pad or a virtual key pad (e.g., using a touch-sensitive interface) or both.

The housing **1200** may be elongated vertically, or may take on other sizes and shapes (including clamshell housing structures). The key pad **1400** may include a mode selection key, or other hardware or software for switching between text entry and telephony entry.

In addition to the processing device **1800,** other parts of the mobile device **1000** are shown schematically in FIG. 5. These include a communications subsystem **1001**; a short-range communications subsystem **1020**; the key pad **1400** and the display **1600,** along with other input/output devices **1060, 1080, 1100** and **1120**; as well as memory devices **1160**, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800**, in addition to its operating system functions, 1 enables execution of software applications **1300A-1300N** on the device **1000.** A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronised and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks; however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP 1**580** and are then provided to the transmitter **1520** for digital to analog conversion, frequency up conversion, filtering, and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is them further processed by the processing device **1800** for an output to the display **1600,** or alternatively to some other auxiliary I/O device **1060.** A device user may also compose data items, such as e-mail messages, using the key pad **1400** and/or some other auxiliary I/O device **1060,** such as a touchpad, a rocker switch, a thumb-wheel, track ball, or some other type of input device. The composed data items may then be transmitter over the communications network **1401** via the communications subsystem **1001.**

In a voice communications mode, overall operation of the device is substantially similar to the data communications mode, except that received signals are output to a speaker **1100**, and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar device. For example, the short-range communications subsystem may include an infrared device and associated circuits and components, or a Bluetooth" communications module to provide for communication with similarly-enabled systems and devices.

Many modifications and other embodiments will come to the mind of one skilled in the art having the benefit of the teachings presented in the forgoing descriptions and the associated drawings. Therefore, it is understood that various modifications and embodiments are intended to be included within the scope of the appended claims.

## Claims

1. A mobile wireless communications device (31) comprising:
a display (36);
a user input device (7); and
a processor (38) coupled to said display and said user input device and configured to
display a user search interface (40) on said display,
receive entry of search query character data from the user input device,
match the entered search query character data to identify at least one predicted search query term, and
if the at least one predicted search query term is among at least one group of related advertising terms, then display at least one other of the group that would otherwise not match the entered search query character data.

2. The mobile wireless communications device (31) of Claim 1 wherein said user input device (37) comprises a key pad (42') having a plurality of shared keys (44') each corresponding to a plurality of different search query characters.

3. The mobile wireless communications device (31) is of Claim 1,
wherein the at least one predicted search query term comprises a plurality thereof; and
wherein said processor (38) further preferentially ranks advertising terms among the plurality of predicted search query terms.

4. The mobile wireless communications device (31) of Claim 1 wherein said processor (38) is configured to visually highlight the predicted search query terms from the group of related advertising terms on said display (36).

5. The mobile wireless communications device (31) of Claim 1,
wherein said group of related advertising terms has an expiration date associated therewith; and
wherein said processor (38) ceases matching predicted search query terms from the group of related advertising terms after the expiration date.

6. The mobile wireless communications device (31) of Claim 1 wherein said processor (38) further permits user designation of predicted search query terms as advertising terms.

7. A communications system (30) comprising:
an advertising server for providing at least one group of related advertising terms; and
a mobile wireless communications device (31) comprising
a display (36),
a user input device (37), and
a professor (38) coupled to said display and said user input device and configured to
display a user search interface (40) on said display,
receive entry of search query character data from the user input device,
matching the entered search query character data to identify at least one predicted search query term, and
if the at least one predicted search query term is among the at least one group of related advertising terms, then displaying at least one other of the group that would otherwise not match the entered search query character data.

8. The communications system (30) of Claim 7 wherein said user input device (37) comprises a key pad (42') having a plurality of shared keys (44') each corresponding to a plurality of different, search query characters.

9. The communications system (30) of Claim 7,
wherein the at least one predicted search query term comprises a plurality thereof; and
wherein said processor (38) further preferentially ranks advertising terms among the plurality of predicted search query terms.

10. The communications system (30) of Claim 7 wherein said processor (38) is configured to visually highlight the predicted search query terms from the group of related advertising terms on said display (36).

11. A communications method for a mobile wireless communications device (31) comprising a display (36) and a user input device (37), the method comprising:
providing at least one group of related advertising terms;
displaying a user search interface (40) on the display of the mobile wireless communications device for permitting entering of search query character data using the user input device;
matching the entered search query character data to identify at least one predicted search query term; and
if the at least one predicted search query term is among the at least one group of related advertising terms, then displaying at least one other of the group that would otherwise not match the entered search query character data on the display.

12. The method of Claim 11 wherein the user input device (37) comprises a key pad (42') having a plurality of shared keys (44') each corresponding to a plurality of different search query characters.

13. The method of Claim 11 wherein the at least one predicted search query term comprises a plurality thereof; and further comprising preferentially ranking advertising terms among the plurality of predicted search query terms.

14. The method of Claim 11 further comprising visually highlighting the predicted search query terms from the group of related advertising terms on the display (36).

15. The method of Claim 11 wherein the group of related advertising terms has an expiration date associated therewith; and further comprising ceasing matching predicted search query terms from the group of related advertising terms after the expiration date.

## Amended claims

### Amended claims in accordance with Rule 137(2) EPC.

**1.** A mobile wireless communications device (31) comprising:
a display (36);
a user input device (37); and
a processor (38) coupled to said display and said user input device and configured to
display a user search interface (40) on said display,
receive entry of search query character data from the user input device,
match the entered search query character data to identify at least one predicted search query term,
if the at least one predicted search query term is among at least one group of related advertising terms, then display at least one other of the group that would otherwise not match the entered search query character data, and
provide a user option to designate predicted search query terms as advertising terms.

**2.** The mobile wireless communications device (31) of Claim 1 wherein said user input device (37) comprises a key pad (42') having a plurality of shared keys (44') each corresponding to a plurality of different search query characters.

**3.** The mobile wireless communications device (31) of Claim 1,
wherein the at least one predicted search query term comprises a plurality thereof; and
wherein said processor (38) further preferentially ranks advertising terms among the plurality of predicted search query terms.

**4.** The mobile wireless communications device (31) of Claim 1 wherein said processor (38) is configured to visually highlight the predicted search query terms from the group of related advertising terms on said display (36).

**5.** The mobile wireless communications device (31) of Claim 1,
wherein said group of related advertising terms has an expiration date associated therewith; and
wherein said processor (38) ceases matching predicted search query terms from the group of related advertising terms after the expiration date.

**6.** A communications system (30) comprising:
an advertising server for providing at least one group of related advertising terms; and
a mobile wireless communications device (31) comprising
a display (36),
a user input device (37), and
a processor (38) coupled to said display and said user input device and configured to
display a user search interface (40) on said display,
receive entry of search query character data from the user input device,
matching the entered search query character data to identify at least one predicted search query term,
if the at least one predicted search query term is among the at least one group of related advertising terms, then displaying at least one other of the group that would otherwise not match the entered search query character data, and
provide a user option to designate predicted search query terms as advertising terms.

**7.** The communications system (30) of Claim 6 wherein said user input device (37) comprises a key pad (42') having a plurality of shared keys (44') each corresponding to a plurality of different search query characters.

**8.** The communications system (30) of Claim 6, wherein the at least one predicted search query term comprises a plurality thereof; and
wherein said processor (38) further preferentially ranks advertising terms among the plurality of predicted search query terms.

**9.** The communications system (30) of Claim 6 wherein said processor (38) is configured to visually highlight the predicted search query terms from the group of related advertising terms on said display (36).

**10.** A communications method for a mobile wireless communications device (31) comprising a display (36) and a user input device (37), the method comprising:
providing at least one group of related advertising terms;
displaying a user search interface (40) on the display of the mobile wireless communications device for permitting entering of search query character data using the user input device;
matching the entered search query character data to identify at least one predicted search query term;
if the at least one predicted search query term is among the at least one group of related advertising terms, then displaying at least one other of the group that would otherwise not match the entered search query character data on the display; and
providing a user option to designate predicted search query terms as advertising terms.

**11.** The method of Claim 10 wherein the user input device (37) comprises a key pad (42') having a plurality of shared keys (44') each corresponding to a plurality of different search query characters.

**12.** The method of Claim 10 wherein the at least one predicted search query term comprises a plurality thereof; and further comprising preferentially ranking advertising terms among the plurality of predicted search query terms.

**13.** The method of Claim 10 further comprising visually highlighting the predicted search query terms from the group of related advertising terms on the display (36).

**14.** The method of Claim 10 wherein the group of related advertising terms has an expiration date associated therewith; and further comprising ceasing matching predicted search query terms from the group of related advertising terms after the expiration date.
